# FASCICULE DE BREVET EUROPEEN

(11) **EP 1 258 389 B1**
(45) Date de publication et mention de la délivrance du brevet: **24.02.2010**
(21) Numéro de dépôt: 02291055.8
(22) Date de dépôt: 25.04.2002
(51) Int. Cl.: B60N 2/015

(54) **Dispositif d'obturation d'un orifice traversant une paroi et destiné à la fixation d'un objet, tel qu'un siège de véhicule automobile**
Verschlussvorrichtung für eine Öffnung zum Befestigen eines Gegenstandes, wie z.B. einen Kraftfahrzeugsitz
Closure device for an opening in a wall for fastening an object, such as an automotive vehicle seat

(30) Priorité: 14.05.2001 FR 0106314
(43) Date de publication de la demande: 20.11.2002
(73) Titulaire: Peugeot Citroën Automobiles SA, 92200 Neuilly sur Seine (FR)
(72) Inventeur: George, Aubert Thibaud Michel Marie, 90000 Belfort (FR)

(56) Documents cités:
- FR-A- 2 785 240
- US-A- 5 947 541
- PATENT ABSTRACTS OF JAPAN vol. 1998, no. 12, 31 octobre 1998 (1998-10-31) -& JP 10 194017 A (HASHIMOTO FORMING IND CO LTD), 28 juillet 1998 (1998-07-28)

## Description

La présente invention concerne un dispositif d'obturation d'un orifice traversant une paroi et destiné à la fixation d'un objet, tel qu'un siège de véhicule automobile.

L'invention s'applique aux véhicules équipés de sièges amovibles, tels que des monospaces ou autres véhicules de loisirs.

Les orifices réalisés dans le plancher d'un véhicule automobile pour permettre la fixation de façon amovible des sièges du véhicule sont fermés chacun par un obturateur amoviblement encastré dans l'orifice afin d'éviter de laisser un trou béant.

Cependant, cette solution connue a pour inconvénient qu'il faut constamment enlever les obturateurs de leurs orifices pour permettre la fixation des sièges du véhicule par l'intermédiaire de moyens de fixation s'engageant dans les orifices et replacer les obturateurs dans les orifices après avoir retiré les sièges du plancher. Outre ces opérations contraignantes de mise et remise en place des obturateurs, ceux-ci peuvent être cassés, oubliés, perdus, etc...

FR-A-2 785 240 décrit une glissière pour siège amovible de véhicule, comprenant une rainure et un capot ou volet monté pivotant autour d'un axe de rotation parallèle au profilé fixe de la glissière entre une position de fermeture de la rainure et une position escamotée dans la rainure.

Cette structure de glissière à capot pivotant est relativement complexe et nécessite un ressort de rappel du capot à sa position de fermeture. En outre, cette structure connue ne s'adapte pas à toutes les formes géométriques existantes.

La présente invention a pour but d'éliminer les inconvénients ci-dessus des dispositifs d'obturation connus en proposant un dispositif d'obturation d'un orifice traversant une paroi, dans lequel peut être amoviblement fixé, par un moyen de fixation, un objet ou une partie de celui-ci, tel qu'un siège de véhicule automobile, et qui est
**caractérisé en ce qu**'il comprend une lame flexible fixée à la paroi de façon à être plaquée élastiquement, en position de repos, sous l'orifice pour l'obturer, la lame s'écartant élastiquement de l'orifice lors de l'introduction du moyen de fixation dans l'orifice pour permettre le blocage de ce moyen de fixation dans l'orifice.

Les caractéristiques complémentaires ci-après font l'objet des revendications dépendantes.

De préférence, la lame flexible comprend à son extrémité opposée à son extrémité libre une partie en forme de plaque conformée de façon à permettre à la lame d'être fixée amoviblement dans une fenêtre adjacente à l'orifice à travers laquelle la lame a été préalablement introduite en-dessous de la paroi et sous l'orifice.

La plaque de fixation de la lame comprend deux pattes latérales venant en appui respectivement sur deux bords latéraux de la fenêtre, une languette arrière venant en appui sous le bord arrière de la fenêtre opposé à l'orifice, et au moins une patte avant recourbée s'engageant élastiquement en appui forcé sur le bord avant de la fenêtre à proximité de l'orifice.

La plaque de fixation comprend avantageusement deux pattes avant recourbées situées de part et d'autre de la portion de liaison de la lame à la plaque de fixation.

L'extrémité libre de la lame flexible est recourbée vers le haut.

La lame et sa plaque de fixation sont disposées symétriquement à un plan de symétrie de la fenêtre et de l'orifice, perpendiculaire à la paroi.

Avantageusement, la lame est métallique.

Le moyen de fixation de l'objet à la paroi comprend un corps de verrouillage, ayant une extrémité pouvant s'introduire dans l'orifice en repoussant la lame flexible, un élément formant plongeur monté coaxialement dans le corps de verrouillage, ce dernier et l'élément formant plongeur étant mobiles l'un par rapport à l'autre de façon que l'élément formant plongeur puisse occuper une position basse à laquelle son extrémité inférieure repousse radialement vers l'extérieur du corps de verrouillage des billes venant en appui sous la face inférieure du bord de l'orifice pour verrouiller l'objet à la paroi et une position tirée vers le haut relativement au corps de verrouillage à laquelle les billes peuvent rentrer dans leurs logements du corps de verrouillage pour retirer ce dernier de la paroi et déverrouiller l'objet.

L'extrémité inférieure de l'élément formant plongeur comprend une collerette permettant de repousser les billes radialement vers l'extérieur et une partie sous-jacente tronconique venant en appui en position basse de l'élément sur un siège de forme conjuguée du corps de verrouillage qui est repoussé axialement vers le haut relativement à la paroi par un ressort monté précontraint autour du corps de verrouillage entre un épaulement supérieur de ce corps et un épaulement inférieur d'une pièce en forme de cloche entourant coaxialement le corps et ayant son extrémité inférieure en appui sur la paroi, de façon à maintenir l'élément formant plongeur à sa position basse dans le corps de verrouillage.

La pièce en forme de cloche est repoussée vers l'extrémité inférieure du corps de verrouillage lorsque ce dernier est déverrouillé de l'orifice de façon à recouvrir les logements des billes pour les empêcher de s'échapper du corps de verrouillage.

L'invention vise également un véhicule automobile qui est équipé de plusieurs dispositifs d'obturation d'orifices qui sont réalisés dans le plancher du véhicule pour permettre la fixation de sièges du véhicule.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
- La figure 1 est une vue en coupe longitudinale d'un dispositif d'obturation conforme à l'invention ;
- La figure 2 est une vue de dessus suivant la flèche II de la figure 1 ; et
- Les figures 3A et 3B représentent un autre exemple d'application du dispositif d'obturation de l'invention.

Le dispositif de l'invention va être décrit en application à la fixation de sièges amovibles à un plancher 1 d'un véhicule automobile, mais il est bien entendu que ce dispositif peut s'appliquer à la fixation amovible de tout autre objet ou d'une partie d'un objet à une paroi quelconque.

Le plancher 1 comporte un certain nombre d'orifices 2, généralement circulaires, dont un seul est visible, et destinés à recevoir chacun un moyen 3 de fixation de façon amovible d'un siège du véhicule au plancher 1.

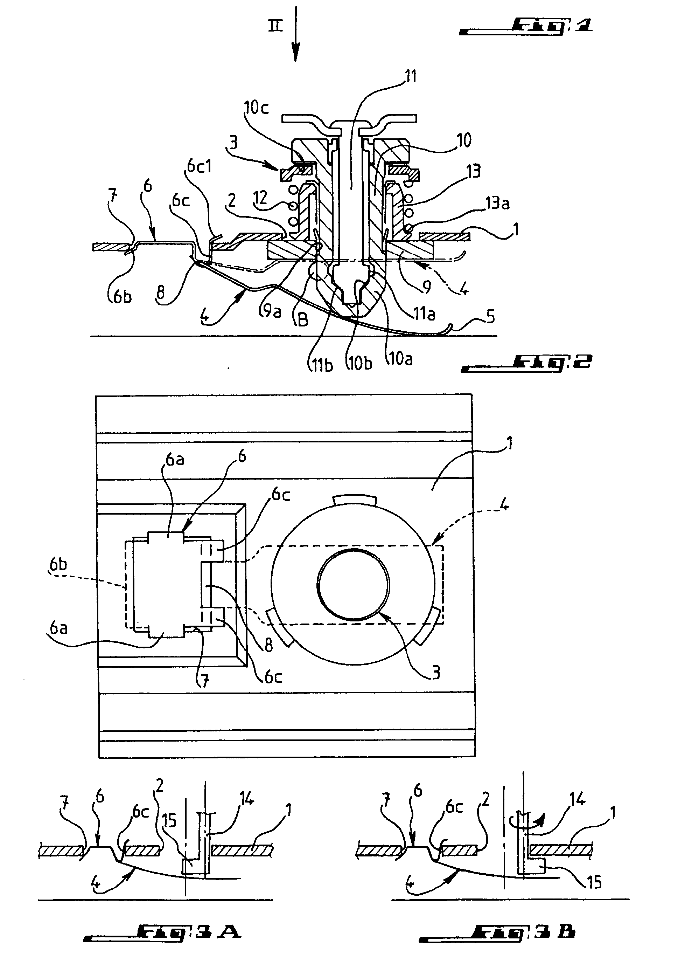

Pour obturer chaque orifice 2 lorsque celui-ci est inutilisé, le dispositif d'obturation comprend une lame flexible 4, de préférence métallique, fixée à la paroi 1 de façon à être plaquée élastiquement sous l'orifice 2 pour l'obturer comme représenté à la position en traits mixtes de la lame 4 en figure 1.

La lame 4 s'écarte élastiquement de l'orifice 2 lorsque le moyen de fixation 3 est introduit dans l'orifice 2 pour permettre le blocage du moyen de fixation dans celui-ci comme on le verra ultérieuremt.

La lame flexible 4 a son extrémité libre 5 recourbée vers le haut pour éviter le coincement de la lame dans l'espace disponible sous le plancher et comprend à son extrémité opposée une partie en forme de plaque 6 conformée de façon à permettre à la lame 4 d'être fixée amoviblement dans une fenêtre rectangulaire 7 adjacente à l'orifice 2 et à travers laquelle la lame 4 a été préalablement introduite sous la paroi 1 et l'orifice 2 pour venir élastiquement en appui sur la face interne de la paroi délimitant l'orifice pour l'obturer lorsque ce dernier est inutilisé.

La plaque de fixation 6 comprend deux pattes latérales 6a venant en appui respectivement sur les deux bords latéraux de la fenêtre 7, une languette arrière 6b venant en appui sous le bord arrière de la fenêtre 7 opposé à l'orifice 2, et deux pattes avant 6c disposées de part et d'autre de la portion de liaison 8 de la lame flexible 4 à la plaque de fixation 6. Chaque patte avant 6c est recourbée de façon à présenter en section transversale une forme en U, la branche avant du U de chaque patte 6c s'engageant élastiquement en appui forcé sur le bord avant de la fenêtre 7 situé du côté de l'orifice 2 à proximité de celui-ci. Chaque branche avant de la patte 6c comporte à son bord supérieur une petite languette de préhension 6c1 permettant de retirer manuellement la patte 6 de la fenêtre 7.

Comme cela ressort de la figure 2, la lame flexible 4, de forme rectangulaire, et la plaque de fixation 6 sont symétriques relativement à un plan de symétrie de la fenêtre 7 et de l'orifice 2, ce plan étant disposé perpendiculairement à la paroi 1.

Selon une variante de réalisation, il est possible de prévoir une seule patte avant recourbée 6c de la plaque de fixation et qui serait alors située entre deux branches latérales de liaison de la lame 4 à la plaque de fixation 6.

Le montage de la lame flexible 4 s'effectue ainsi de l'extérieur du plancher 1 en engageant tout d'abord la lame 4 au travers de la fenêtre 7 pour qu'elle passe dans l'espace existant sous le plancher 1 et l'orifice 2 et, après avoir engagé la languette arrière 6b sous le bord arrière de la fenêtre 7, l'utilisateur n'a plus qu'à exercer une pression sur la plaque 6 pour encastrer les deux pattes recourbées 6c dans la fenêtre 7 pour qu'elles viennent en appui forcé sur le bord avant de celle-ci. Une fois la plaque 6 fixée dans la fenêtre 7, la lame flexible 4 vient élastiquement en appui sur la face interne de la paroi délimitant le bord périphérique de l'orifice 2 par l'intermédiaire d'une rondelle formant entretoise 9 solidaire, par exemple par soudage, de cette face interne et d'une épaisseur suffisante pour que la lame 4 soit en appui directement sous l'entretoise 9 parallèlement à la paroi 1 et de façon que son extrémité libre recourbée 5 ne soit pas en contact avec la paroi 1. Bien entendu, le perçage central de l'entretoise 9 délimitera l'orifice de passage du moyen de fixation 3.

Ce moyen de fixation comprend un corps de verrouillage cylindrique 10 ayant une extrémité inférieure tronconique 10a pouvant être introduite dans l'orifice 2, plus précisément dans l'orifice 9a de l'entretoise 9, en repoussant vers le bas la lame flexible 4, un élément formant plongeur 11 monté coaxialement dans le corps de verrouillage 10 et dont la partie supérieure externe est montée à la structure du siège tout en permettant un déplacement de l'élément 11 relativement à celle-ci et au corps 10 par un levier (non représenté) faisant partie du siège. L'élément formant plongeur 11 peut occuper relativement au corps 10 une position basse représentée en figure 1 à laquelle l'extrémité inférieure du plongeur 11 repousse radialement vers l'extérieur du corps 10 des billes B, dont une seule est représentée, faisant saillie du corps 10 de façon à venir en appui sous l'entretoise 9 et empêcher ainsi le retrait axial vers l'extérieur du moyen de fixation 3, et une position tirée vers le haut relativement au corps de verrouillage à laquelle les billes peuvent rentrer dans leurs logements du corps de verrouillage 10 pour permettre le retrait du moyen de fixation 3 de la paroi et déverrouiller ainsi le siège.

L'extrémité inférieure de l'élément formant plongeur 11 comprend une collerette 11a permettant de repousser les billes radialement vers l'extérieur et une partie sous-jacente tronconique 11b venant en appui en position basse de l'élément 11 sur un siège de forme conjuguée 10b du corps de verrouillage 10 qui est repoussé vers le haut relativement à la paroi 1 par un ressort 12 monté précontraint autour du corps 10 coaxialement à celui-ci entre un épaulement supérieur 10c du corps 10 et un épaulement inférieur 13a d'une pièce en forme de cloche 13 entourant coaxialement le corps 10 et ayant son extrémité inférieure en appui sur l'entretoise 9, de façon à maintenir l'élément formant plongeur 11 à sa position basse dans le corps de verrouillage 10.

Le déverrouillage du moyen de fixation 7 s'effectue à l'aide du levier qui tire l'élément formant plongeur 11 vers le haut relativement au corps 10 de façon à permettre aux billes B de rentrer dans leurs logements une fois le passage du trou de chaque bille B dégagé par la collerette 11a de l'élément 11, ce qui permet le retrait axial vers le haut du moyen de fixation 3. Le ressort 12 exerce alors une poussée sur la pièce en forme de cloche 13 vers l'extrémité inférieure 10a du corps 10 jusqu'à un niveau où la pièce 13 empêche les billes de sortir de leurs logements respectifs.

Bien entendu, la lame flexible 4 peut venir en contact directement sur la face interne du plancher 1 pour obturer l'orifice 2 en prévoyant une extrémité libre plate de la lame 4.

Le dispositif d'obturation de l'invention est d'une structure extrêmement simple et est monté par l'extérieur du plancher du véhicule au travers de la fenêtre contiguë à l'orifice à obturer, ce qui est particulièrement intéressant quand le plancher ou la paroi comportant l'orifice délimite un corps creux recevant le dispositif de fixation. Ce dispositif, en position d'obturation de l'orifice, permet d'éviter toute intrusion de corps étranger dans l'espace libre en dessous du plancher. En outre, le dispositif d'obturation améliore la finition d'ensemble et évite toute manipulation particulière avant de fixer le siège au plancher du véhicule.

Enfin, si la description ci-dessus a été faite en prenant l'exemple d'un siège de véhicule fixé au plancher de celui-ci, l'invention s'applique à toute paroi comportant un orifice destiné à recevoir un moyen de fixation et que l'on veut obturer une fois que le dispositif de fixation est enlevé, si compris dans le cadre de l'invention telle que définie par les revendications.

L'orifice en question peut être par exemple un trou taraudé destiné à recevoir une vis, ou comme représenté aux figures 3A, 3B, un trou 2 à travers lequel passe une fixation de type quart de tour ou analogue, constituée par exemple d'un axe 14 décalé par rapport à l'axe du trou et muni d'un ergot 15 à son extrémité de façon à fixer l'axe 14 au trou 2 par simple rotation de l'axe de 180°.

## Revendications

1. Dispositif d'obturation d'un orifice (2) traversant une paroi (1), dans lequel peut être amoviblement fixé, par un moyen de fixation, un objet ou une partie de celui-ci, tel qu'un siège de véhicule automobile, **caractérisé en ce qu'**il comprend une lame flexible (4) fixée à la paroi (1) de façon à être plaquée élastiquement, en position de repos, sous l'orifice (2) pour l'obturer, la lame (4) s'écartant élastiquement de l'orifice (2) lors de l'introduction du moyen de fixation (3) dans l'orifice (2) pour permettre le blocage de ce moyen dans l'orifice (2).

2. Dispositif selon la revendication 1, **caractérisé en ce que** la lame flexible (4) comprend à son extrémité opposée à son extrémité libre (5) une partie en forme de plaque (6) conformée de façon à permettre à la lame (4) d'être fixée amoviblement dans une fenêtre (7) adjacente à l'orifice (2) à travers laquelle la lame (4) a été préalablement introduite en-dessous de la paroi (1) et sous l'orifice (2).

3. Dispositif selon la revendication 2, **caractérisé en ce que** la plaque de fixation (6) de la lame (4) comprend deux pattes latérales (6a) venant en appui respectivement sur deux bords latéraux de la fenêtre (7), une languette arrière (6b) venant en appui sous le bord arrière de la fenêtre (7) opposé à l'orifice (2), et au moins une patte avant recourbée (6c) s'engageant élastiquement en appui forcé sur le bord avant de la fenêtre (7) à proximité de l'orifice (2).

4. Dispositif selon la revendication 3, **caractérisé en ce que** la plaque de fixation (6) comprend deux pattes avant recourbées (6c) situées de part et d'autre de la portion de liaison (8) de la lame (4) à la plaque de fixation (6).

5. Dispositif selon l'une des revendications précédentes, **caractérisé en ce que** l'extrémité libre (5) de la lame flexible (4) est recourbée vers le haut.

6. Dispositif selon la revendication 4 ou 5, **caractérisé en ce que** la lame (4) et sa plaque de fixation (6) sont disposées symétriquement à un plan de symétrie de la fenêtre (7) et de l'orifice (2) perpendiculaire à la paroi (1).

7. Dispositif selon l'une des revendications précédentes, **caractérisé en ce que** la lame (4) est métallique.

8. Dispositif selon l'une des revendications précédentes, **caractérisé en ce que** le moyen de fixation (3) de l'objet à la paroi (1) comprend un corps de verrouillage (10) ayant une extrémité (10a) pouvant s'introduire dans l'orifice (2) en repoussant la lame flexible (4), un élément formant plongeur (11) monté coaxialement dans le corps de verrouillage (10), ce dernier et l'élément formant plongeur étant mobiles l'un par rapport à l'autre de façon que l'élément (11) puisse occuper une position basse à laquelle son extrémité inférieure (10a) repousse radialement vers l'extérieur du corps de verrouillage (10) des billes (B) venant en appui sous la face inférieure du bord de l'orifice (2) pour verrouiller l'objet à la paroi (1) et une position tirée vers le haut relativement au corps de verrouillage (10) à laquelle les billes (B) peuvent rentrer dans leur logement du corps de verrouillage (10) pour retirer ce dernier de la paroi (1) et déverrouiller l'objet.

9. Dispositif selon la revendication 8, **caractérisé en ce que** l'extrémité inférieure de l'élément formant plongeur (11) comprend une collerette (11a) permettant de repousser les billes (B) radialement vers l'extérieur et une partie sous-jacente tronconique (11b) venant en appui en position basse de l'élément (11) sur un siège de forme conjuguée (10b) du corps de verrouillage (10) qui est repoussé axialement vers le haut relativement à la paroi (1) par un ressort (12) monté précontraint autour du corps de verrouillage (10) entre un épaulement supérieur (10c) de ce corps et un épaulement inférieur (13a) d'une pièce en forme de cloche (13) entourant coaxialement le corps (10) et ayant son extrémité inférieure en appui sur la paroi (1) de façon à maintenir l'élément formant plongeur (11) à sa position basse dans le corps de verrouillage (10).

10. Dispositif selon la revendication 9, **caractérisé en ce que** la pièce en forme de cloche (13) est repoussée vers l'extrémité inférieure (10a) du corps de verrouillage (10) lorsque ce dernier est déverrouillé de l'orifice (2) de façon à recouvrir les logements des billes (B) pour les empêcher de s'échapper du corps de verrouillage (10).

11. Véhicule automobile, **caractérisé en ce qu'**il est équipé de plusieurs dispositifs d'obturation d'orifices suivant l'une quelconque des revendications précédentes, les orifices (2) étant réalisés dans le plancher (1) du véhicule pour permettre la fixation de sièges du véhicule.

## Claims

1. A device for closing off an opening (2) passing through a wall (1), in which an object or a part thereof, such as a seat of an automobile, can be detachably fixed, by a fixing means, **characterized in that** it comprises a flexible sheet (4) fixed to the wall (1) so as to be flattened elastically, in a position of rest, under the opening (2) to close it off, the sheet (4) separating elastically from the opening (2) on the introduction of the fixing means (3) in the opening (2) to permit the blocking of this means in the opening (2).

2. The device according to Claim 1, **characterized in that** the flexible sheet (4) comprises at its end opposite its free end (5) a part in the form of a plate (6) shaped so as to allow the sheet (4) to be fixed detachably in a window (7) adjacent to the opening (2) through which the sheet (4) has been previously introduced beneath the wall (1) and beneath the opening (2).

3. The device according to Claim 2, **characterized in that** the fixing plate (6) of the sheet (4) comprises two lateral tabs (6a) coming to rest respectively on two lateral edges of the window (7), a rear tongue (6b) coming to rest beneath the rear edge of the window (7) opposite the opening (2), and at least one bent front tab (6c) engaging elastically, resting in a forced manner, on the front edge of the window (7) close to the opening (2).

4. The device according to Claim 3, **characterized in that** the fixing plate (6) comprises two bent front tabs (6c) situated on either side of the connecting portion (8) of the sheet (4) to the fixing plate (6).

5. The device according to one of the preceding claims, **characterized in that** the free end (5) of the flexible sheet (4) is bent upwards.

6. The device according to Claim 4 or 5, **characterized in that** the sheet (4) and its fixing plate (6) are arranged symmetrically to a plane of symmetry of the window (7) and of the opening (2) perpendicular to the wall (1).

7. The device according to one of the preceding claims, **characterized in that** the sheet (4) is metallic.

8. The device according to one of the preceding claims, **characterized in that** the fixing means (3) of the object to the wall (1) comprises a locking body (10) having an end (10a) being able to be introduced into the opening (2), pushing back the flexible sheet (4), an element forming a plunger (11) mounted coaxially in the locking body (10), the latter and the element forming a plunger being movable one with respect to the other such that the element (11) can occupy a low position at which its lower end (10a) pushes back radially towards the exterior of the locking body (10) balls (B) coming to rest under the lower face of the edge of the opening (2) to lock the object to the wall (1) and a position drawn upwards relative to the locking body (10) at which the balls (B) can enter again into their housing of the locking body (10) to withdraw the latter from the wall (1) and to unlock the object.

9. The device according to Claim 8, **characterized in that** the lower end of the element forming a plunger (11) comprises a flange (11a) allowing the balls (B) to be pushed back radially towards the exterior and a subjacent part in the shape of a truncated cone (11b) coming to rest in the low position of the element (11) on a seat of conjugate form (10b) of the locking body (10) which is pushed back axially upwards relative to the wall (1) by a spring (12) mounted in a prestressed manner around the locking body (10) between an upper shoulder (10c) of this body and a lower shoulder (13a) of a bell-shaped piece (13) surrounding the body (10) coaxially and having its lower end resting on the wall (1) so as to keep the element forming a plunger (11) in its low position in the locking body (10).

10. The device according to Claim 9, **characterized in that** the bell-shaped piece (13) is pushed back towards the lower end (10a) of the locking body (10) when the latter is unlocked from the opening (2) so as to cover the housings of the balls (B) to prevent them from escaping from the locking body (10).

11. An automobile, **characterized in that** it is equipped with several devices for closing off openings according to any of the preceding claims, the openings (2) being realized in the floor (1) of the vehicle to allow the fixing of vehicle seats.

## Patentansprüche

1. Vorrichtung zum Verschließen einer Öffnung (2), die eine Wand (1) durchquert, in der ein Objekt oder ein Teil dieses durch ein Befestigungsmittel abnehmbar befestigt werden kann, wie zum Beispiel ein Kraftfahrzeugsitz, **dadurch gekennzeichnet, dass** sie eine biegsame Klinge (4), die an der Wand (1) derart befestigt ist, dass sie in Ruhestellung elastisch unter der Öffnung (2), um diese zu verschließen, angedrückt wird, aufweist, wobei sich die Klinge (4) elastisch von der Öffnung (2) bei dem Einführen des Befestigungsmittel (3) in die Öffnung (2) abspreizt, um das Blockieren dieses Mittels in der Öffnung (2) zu erlauben.

2. Vorrichtung nach Anspruch 1, **dadurch gekennzeichnet, dass** die biegsame Klinge (4) an ihrem dem freien Ende (5) entgegen gesetzten Ende einen Teil in Plattenform (6) aufweist, der derart ausgebildet ist, dass der Klinge (4) erlaubt wird, abnehmbar in einem Fenster (7) neben der Öffnung (2), durch die die Klinge (4) vorab unterhalb der Wand (1) und unter der Öffnung (2) eingeführt wurde, abnehmbar befestigt zu werden.

3. Vorrichtung nach Anspruch 2, **dadurch gekennzeichnet, dass** die Befestigungsplatte (6) der Klinge (4) zwei seitliche Pratzen (6a) aufweist, die jeweils auf zwei seitlichen Rändern des Fensters (7) zum Aufliegen kommen, wobei eine hintere Lasche (6b) unter dem hinteren Rand des Fensters (7) der Öffnung (2) entgegengesetzt zum Aufliegen kommt, und sich eine zurückgebogene vordere Pratze (6c) elastisch in forcierter Auflage auf dem vorderen Rand des Fensters (7) in der Nähe der Öffnung (2) einfügt.

4. Vorrichtung nach Anspruch 3, **dadurch gekennzeichnet, dass** die Befestigungsplatte (6) zwei vordere zurückgebogene Pratzen (6c) aufweist, die zu beiden Seiten des Abschnitts (8) zum Verbinden der Klinge (4) mit der Befestigungsplatte (6) liegen.

5. Vorrichtung nach einem der vorhergehenden Ansprüche, **dadurch gekennzeichnet, dass** das freie Ende (5) der biegsamen Klinge (4) nach oben gebogen ist.

6. Vorrichtung nach Anspruch 4 oder 5, **dadurch gekennzeichnet, dass** die Klinge (4) und ihre Befestigungsplatte (6) symmetrisch zu einer Symmetrieebene des Fensters (7) und der Öffnung (2) senkrecht zu der Wand (1) angeordnet sind.

7. Vorrichtung nach einem der vorhergehenden Ansprüche, **dadurch gekennzeichnet, dass** die Klinge (4) metallisch ist.

8. Vorrichtung nach einem der vorhergehenden Ansprüche, **dadurch gekennzeichnet, dass** das Mittel (3) zum Befestigen des Objekts an der Wand (1) einen Verriegelungskörper (10) aufweist, der ein Ende (10a) hat, das sich in die Öffnung (2) fügen kann, indem es die biegsame Klinge (4) zurückschiebt, ein Element, das einen Stößel (11) bildet, der koaxial in den Verriegelungskörper (10) montiert ist, wobei dieser Letztere und das Element, das den Stößel bildet, zueinander derart beweglich sind, dass das Element (11) eine Tiefstellung einnehmen kann, in der sein unteres Ende (10a) Kugeln (B), die unter der Unterseite des Rand der Öffnung (2) zum Aufliegen kommen, radial zur Außenseite des Verriegelungskörpers (10) zurückschiebt, um das Objekt an der Wand (1) zu verriegeln, und eine in Bezug zu den Verriegelungskörper (10) nach oben gezogene Position, an der die Kugeln (B) in ihre Aufnahme des Verriegelungskörpers (10) eindringen können, um diesen Letzteren von der Wand (1) zu entfernen und das Objekt zu entriegeln.

9. Vorrichtung nach Anspruch 8, **dadurch gekennzeichnet, dass** das untere Ende des Elements, das einen Stößel (11) bildet, einen Kragen (11a) aufweist, der es erlaubt, die Kugeln (B) radial zur Außenseite zurückzuschieben, und einen darunter liegenden kegelstumpfförmigen Teil (11b), der in Tiefstellung des Elements (11) auf einem Sitz in dazu passender Form (10b) des Verriegelungskörpers (10) zum Aufliegen kommt, der axial in Bezug zu der Wand (1) von einer Feder (12) nach oben geschoben wird, die vorgespannt um den Verriegelungskörper (10) zwischen einem oberen Ansatz (10c) dieses Körpers und einem unteren Ansatz (13a) eines Teils in Glockenform (13) montiert ist, der den Körper (10) koaxial umgibt und sein unteres Ende derart in Auflage auf der Wand (1) hat, dass das Element, das einen Stößel (11) bildet, an seiner Tiefstellung in dem Verriegelungskörper (10) gehalten wird.

10. Vorrichtung nach Anspruch 9, **dadurch gekennzeichnet, dass** der Teil in Glockenform (13) zu dem unteren Ende (10a) des Verriegelungskörpers (10) zurückgeschoben wird, wenn dieser Letztere von der Öffnung (2) entriegelt wird, so dass die Aufnahmen der Kugeln (B) abgedeckt werden, um die Kugeln daran zu hindern, aus dem Verriegelungskörper (10) zu entweichen.

11. Kraftfahrzeug, **dadurch gekennzeichnet, dass** es mit mehreren Vorrichtungen zum Verschließen von Öffnungen nach einem der vorhergehenden Ansprüche ausgerüstet ist, wobei die Öffnungen (2) in dem Fußboden (1) des Fahrzeugs hergestellt werden, um das Befestigen von Sitzen des Fahrzeugs zu erlauben.
